# EUROPÄISCHE PATENTSCHRIFT

(11) **EP 3 219 376 B1**
(45) Veröffentlichungstag und Bekanntmachung des Hinweises auf die Patenterteilung: **31.10.2018**
(21) Anmeldenummer: 16178856.7
(22) Anmeldetag: 11.07.2016
(51) Int. Cl.: B01D 39/16

(54) **STAUBSAUGERFILTERBEUTEL AUS RECYCLIERTEN KUNSTSTOFFEN**
VACUUM CLEANER FILTER BAG MADE FROM RECYCLED PLASTICS
SAC À POUSSIÈRE EN MATÉRIAUX SYNTHÉTIQUES RECYCLÉS

(30) Priorität: 17.03.2016 EP 16160922; 17.03.2016 EP 16160921
(43) Veröffentlichungstag der Anmeldung: 20.09.2017
(73) Patentinhaber: Eurofilters N.V., 3900 Overpelt (BE)
(72) Erfinder: SAUER, Ralf, 3900 Overpelt (BE); SCHULTINK, Jan, 3900 Overpelt (BE)
(74) Vertreter: Grünecker Patent- und Rechtsanwälte PartG mbB

(56) Entgegenhaltungen:
- EP-A2- 0 960 645
- US-A1- 2009 223 190
- US-A1- 2011 030 557

## Beschreibung

Die vorliegende Erfindung betrifft einen Staubsaugerfilterbeutel, der vornehmlich aus Kunststoff-Recyclaten gebildet ist.

Filterbeutel aus Vliesstoffen haben Papierfilterbeutel in den letzten 10 Jahren wegen der erheblich besseren Gebrauchseigenschaften praktisch vollständig verdrängt. Insbesondere die Abscheideleistung, die Verstopfungsneigung und die mechanische Festigkeit wurden kontinuierlich verbessert. Die hierfür verwendeten Vliesstoffe sind dabei in der Regel aus thermoplastischen Kunststoffen, insbesondere Polypropylen (PP) und/oder Polyester (PET) gebildet.

Auch wenn noch weiter Bedarf an Verbesserung dieser Eigenschaften besteht, ist trotzdem schon zu spüren, dass die hohen Kosten für die aufwendigen Filterkonstruktionen immer weniger Akzeptanz beim Endkunden finden.

Außerdem wird die Verwendung hochwertiger und schwerer Vliesstoffe für ein Wegwerfprodukt aus ökologischen Gründen immer kritischer gesehen.

Biologisch abbaubare Filterbeutel wie sie in der EP 2 301 404 und der WO 2011/047764 vorgeschlagen werden, scheinen auch kein erfolgversprechender Ansatz zur Verbesserung der ökologischen Eigenschaften zu sein, da Filterbeutel oft über die Müllverbrennung entsorgt werden und eine Kompostierung alleine schon wegen des vornehmlich nicht biologisch abbaubaren Sauggutes nicht in Frage kommt.

Vliesstoff-Filterbeutel für Staubsauger bestehen heute immer aus mehreren Lagen (EP 1 198 280, EP 2 433 695, EP 1 254 693). Zum Einsatz kommen Stützlagen, um die notwendige mechanische Festigkeit zu erreichen, Grobfilterlagen, die eine hohe Speicherkapazität für Staub aufweisen, ohne dass sich der Luftwiderstand zu stark erhöht und Feinfilterlagen zur Filtration von Partikeln < 1 µm.

Zur Erhöhung der Staubspeicherfähigkeit werden seit einigen Jahren zusätzlich Diffusoren und Trennwände in Filterbeuteln eingesetzt, die die Strömungsverhältnisse im Filterbeutel optimieren sollen, um so die Standzeit zu erhöhen.

Zur Fertigung dieser unterschiedlichen Materialien kommen verschiedenste Technologien zum Einsatz. Als Feinfilterlage werden meist Meltblown Mikrofaservliesstoffe verwendet. Diese Meltblownvliesstoffe sind Extrusionsvliesstoffe, bestehen meist aus Polypropylen und weisen Filamentdurchmesser im Bereich von unter 1 µm bis zu wenigen µm auf. Um hohe Abscheideleistungen zu erreichen, werden diese Materialien elektrostatisch aufgeladen (z. B. mittels Coronaentladung). Zur weiteren Verbesserung der Abscheideleistung wurde vorgeschlagen, im Elektrospinnverfahren hergestellte Nanofasern auf Vliesstoffträgermaterialien aufzubringen (DE 199 19 809).
Für die Kapazitätslage kommen sowohl Stapelfaservliesstoffe, Extrusionsvliesstoffe, aber auch Faservliese (EP 1 795 247) aus Stapelfasern oder Filamenten zum Einsatz. Als Materialien für Kapazitätslagen werden meist Polypropylen oder Polyester, aber auch Fluff Pulp (EP 0 960 645, EP 1 198 280) verwendet.
Der Einsatz recycelter Kunststoffe (z. B. recyceltes Polyethylenterephthalat (rPET)) für Gewebe wurde in der WO 2013/106392 vorgeschlagen.
Die Verwendung von rPET als Rohstoff für Meltblown-Vliesstoffe wurde bereits untersucht (Handbook of Nonwovens, Woodhead Publishing Ltd., Ed. by S.J. Russelt, Kapitel 4.10.1).
Die CN101747596 beschreibt die Verwendung von recyclierten PET bzw. recyclierten PBT (rPET/rPBT) als Material für Microfilamente.

US 2009/223190 A1 zeigt ein Filtermaterial, das insbesondere für Staubsaugerfilterbeutel verwendet werden kann. Das Filtermaterial umfasst ein poröses Substrat, das ein Mehrzahl von rezyklierten Fasern umfasst, die mittels ein Klebstoffs aneinander gebunden sind.

Ausgehend hiervon ist es somit Aufgabe der vorliegenden Erfindung, Staubsaugerfilterbeutel anzugeben, die den auf dem Markt befindlichen Staubsaugerfilterbeuteln in den Punkten Staubabscheideleistung und Standzeit in Nichts nachstehen und somit hervorragende Gebrauchseigenschaften aufweisen, jedoch vorwiegend aus wiederverwerteten Materialien oder aus Abfallmaterialien bestehen. Insbesondere ist es daher Aufgabe der vorliegenden Erfindung, ökologisch wie auch ökonomisch besonders vorteilhafte Staubsaugerfilterbeutel zu realisieren. Es soll vorzugsweise ein Anteil an wiederverwerteten Materialien im Filterbeutel von 40% bis zu 95% realisiert werden. Ein solcher Filterbeutel würde somit den Global Recycled Standard (GRS), v3 erfüllen.
Diese Aufgabe wird mit dem Staubsaugerfilterbeutel gemäß Patentanspruch 1 gelöst. Die abhängigen Patentansprüche stellen hierbei vorteilhafte Ausgestaltungen dar. Patentanspruch 14 gibt ferner die Verwendungsmöglichkeit von recyclierten Kunststoffen für Staubsaugerfilterbeutel an.
Die Erfindung betrifft somit einen Staubsaugerfilterbeutel, der eine einen Innenraum umschließende Wandung aus einem luftdurchlässigen Material umfasst. In die Wandung ist eine Einlassöffnung eingebracht, über die beispielsweise ein Staubsaugerstutzen in den Staubsaugerfilterbeutel eingebracht werden kann. Das luftdurchlässige Material der Wandung umfasst dabei mindestens eine Lage eines Vliesstoffs und/oder eine Lage aus einem Faservlies, wobei der Vliesstoff bzw. das Faservlies Fasern umfassen bzw. hieraus bestehen, die aus einem recyclierten Kunststoff oder mehreren recyclierten Kunststoffen gebildet sind.

Der für die Zwecke der vorliegenden Erfindung verwendete Begriff "recyclierter Kunststoff" ist dabei synonym zu verstehen zu Kunststoff-Recyclaten. Zur begrifflichen Definition wird hierbei auf die Norm DIN EN 15347:2007 verwiesen.

Der Staubsaugerfilterbeutel gemäß der vorliegenden Erfindung umfasst dabei eine Wandung aus einem luftdurchlässigen Material, das beispielsweise mehrlagig aufgebaut sein kann. Mindestens eine dieser Lagen ist dabei ein Vliesstoff bzw. ein Faservlies, das recyclierte Kunststoffe umfasst und insbesondere aus recyclierten Kunststoffen gebildet ist. Im Unterschied zum aus dem Stand der Technik bekannten Staubsaugerfilterbeuteln wird somit weniger oder gar kein frisches/reines (virgin) Kunststoffmaterial zur Herstellung der der Wandung des Staubsaugerfilterbeutels zugrundeliegenden Vliesstoffen bzw. Faservliesen verwendet, sondern es gelangen überwiegend oder ausschließlich Kunststoffe zum Einsatz, die bereits in Verwendung waren und durch entsprechende Recycling-Verfahren wiedergewonnen wurden. Derartige Filterbeutel sind in ökologischer Hinsicht deutlich vorteilhaft, da sie in hohem Maße rohstoffneutral hergestellt werden können. Diese Filterbeutel bieten ebenso ökonomische Vorteile, da die meisten recyclierten Kunststoffmaterialien deutlich günstiger bezogen werden können, als die entsprechenden Rohstoffe, die nicht recycliert sind ("virgin" Kunststoffe).

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden. Die für ein Aufwickeln minimal erforderliche Bahnspannung beträgt 0,25 PLI oder 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden. Bezüglich der Definition dieser Terminologie wird auf die EP 1 795 427 A1 verwiesen, deren Offenbarungsgehalt diesbezüglich mit zum Gegenstand der vorliegenden Patentanmeldung gemacht wird.

Gemäß einer bevorzugten Ausführungsform sind die Fasern des Vliesstoffs bzw. des Faservlieses, das im luftdurchlässigen Material der Wandung des erfindungsgemäßen Staubsaugerfilterbeutels beinhaltet ist, aus einem einzigen recyclierten Kunststoffmaterial gebildet.

Alternativ ist es jedoch ebenso bevorzugt, wenn die Fasern des Vliesstoffes bzw. des Faservlieses aus unterschiedlichen Materialien gebildet sind, von denen zumindest eines einen recyclierten Kunststoff darstellt. Hierbei sind insbesondere zwei Ausführungsformen denkbar:
Einerseits kann es sich um ein Gemisch mindestens zweier Fasertypen handeln, beispielsweise um Fasergemische, die aus zumindest zwei unterschiedlichen recyclierten Kunststoffen gebildet sind.

Andererseits ist es ebenso möglich, dass das Faservlies bzw. der Vliesstoff Bikomponentenfasern (BiKo-Fasern) beinhaltet oder hieraus gebildet ist, die aus einem Kern, sowie einem den Kern umhüllenden Mantel bestehen. Kern und Mantel sind dabei aus unterschiedlichen Materialien gebildet. Neben Kern/Mantel Bikomponentenfasern kommen auch die anderen gebräuchlichen Varianten von Bikomponentenfasern (z. B. Side by Side) in Frage.

Die Bikomponentenfasern können als Stapelfasern vorliegen oder als Extrusionsvliesstoff (beispielsweise aus Meltblownvliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem recyclierten Kunststoff gebildet ist, für den Mantel kann beispielsweise auch ein Virgin-Kunststoff, aber alternativ ebenso ein anderer recyclierter Kunststoff eingesetzt werden.

Für die Vliesstoffe bzw. Faservliese für die Zwecke der vorliegenden Erfindung ist es möglich, dass es sich hierbei um trockengelegte, nassgelegte oder Extrusionsvliesstoffe bzw. -Vliese handelt. Demzufolge können die Fasern der Vliesstoffe bzw. Faservliese endliche Länge aufweisen (Stapelfasern), aber auch theoretisch unendliche Länge aufweisen (Filamente).

Des Weiteren ist es möglich, dass die luftdurchlässigen Materialien der Wandung des Staubsaugerfilterbeutels mindestens eine Lage eines Vliesstoffes umfassen, der staubund/oder faserförmiges recycliertes Material aus der Herstellung von Textilien, insbesondere Baumwolltextilien, und/oder aus der Wollschur und/oder Samenfasern umfasst. Das staubund/oder faserförmige recyclierte Material kann dabei insbesondere Baumwollstaub sein. Die Samenfasern können Baumwolllinters oder Kapokfasern sein.

Ein derartiger Vliesstoff ist dabei mittels Bindefasern, beispielsweise "Fusion Fibers" oder Bicomponentenfasern gebunden, so dass das staub- und/oder faserförmige recyclierte Material bzw. die Samenfasern gebunden vorliegen. Die Fusion Fibers oder die Bikomponentenfasern umfassen dabei vorzugsweise zumindest einen recyclierten Kunststoff. Entsprechende Vliesstoffmaterialien sind z.B. aus der WO 2011/057641 A1 bekannt. Auch die erfindungsgemäßen Vliesstoffmaterialien können entsprechend ausgestaltet sein.

Beispielsweise kann das luftdurchlässige Material mindestens eine Lage eines Vliesstoffes umfassen, die staub- und/oder faserförmiges recycliertes Material aus der Herstellung von Textilien, insbesondere Baumwolltextilien, und/oder aus der Wollschur und/oder Samenfasern umfasst.

Das staub- und/oder faserförmige recyclierte Material aus der Herstellung von Textilien fällt insbesondere bei der Prozessierung von Textilmaterialien (insbesondere Textilfasern und - filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese staub- und/oder faserförmigen Materialien stellen Abfallmaterialien dar, die sich auf den zur Verarbeitung der Textilien verwendeten Maschinen oder Filtermaterialien absetzen können. Die Stäube bzw. Fasern werden normalerweise entsorgt und thermisch verwertet.

Bei dem staub- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "pre-consumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls staubund/oder faserförmiges recycliertes Material; hier spricht man von "post-consumer waste".

Das staub- und/oder faserförmige recyclierte Material aus der Herstellung von Textilien umfasst also insbesondere Fasern, die aus Abfallmaterialien aus der Textil- und Bekleidungsindustrie, aus Post-Consumer-Abfall (Textilien und ähnliches) und aus Produkten, die für das Recycling gesammelt wurden, gewonnen wurden.

Bei der Schafschur zur Gewinnung von Wolle fallen kurze Wollfasern als Abfallprodukt an, die eine weitere Variante eines erfindungsgemäßen staub- und/oder faserförmigen recyclierten Materials darstellen.

Baumwolllinters sind kurze Baumwollfasern, die am Baumwollsamenkern anhaften, nachdem das lange Samenhaar (Baumwolle) vom Kern entfernt worden ist. Baumwolllinters sind in der Faserlänge (typischerweise 1 bis 6 mm) und im Reinheitsgrad stark verschieden, nicht spinnbar und stellen in der Textilindustrie normalerweise einen nicht verwertbaren Reststoff und somit ein Abfallprodukt dar. Man kann zwischen First Cut (FC-Linters), Second Cut (SC-Linters) und Mill Run unterscheiden. Linters können gereinigt und gebleicht werden, um Cotton Linters Cellulose (CLC) zu gewinnen. Auch Baumwolllinters können für die Vliesstoffe, die in luftdurchlässigen Materialien für die erfindungsgemäßen Staubsaugerfilterbeutel eingesetzt werden können, verwendet werden. Insbesondere können ungereinigte und ungebleichte FC- und/oder SC-Linters verwendet werden.

Das staub- und/ oder faserförmige recyclierte Material kann vor der Verwendung weiter zerkleinert werden (z.B. durch die bekannten Mahlverfahren (Hammermühle, Prallmühle) oder Schneidverfahren), um die gewünschte Faserlängenverteilung einzustellen.

In der Vliesstofflage, die im luftdurchlässigen Material enthalten ist, ist das staub- und/oder faserförmige recyclierte Material bzw. sind die Samenfasern gebunden. Das Vliesstoffmaterial hat insofern einen Bindeschritt durchlaufen. Die Bindung des staub- und/oder faserförmigen recyclierten Materials und/oder der Samenfasern erfolgt dabei bevorzugt darüber, dass der Vliesstofflage Bindefasern zugesetzt sind, die beispielsweise thermisch aktiviert werden können (Thermofusion).

Die Herstellung einer entsprechenden Vliesstofflage kann somit dadurch erfolgen, dass beispielsweise das staub- und/oder faserförmige recyclierte Material und/oder die Samenfasern zusammen mit den Bindefasern in einem aerodynamischen Verfahren abgelegt werden und anschließend eine Bindung zum fertigen Vliesstoff durch thermische Aktivierung der Bindefasern erfolgt.

Unter aerodynamischen Verfahren sind Trockenverfahren gemeint, wie sie in Abschnitt 4.1.3 des Handbuchs "Vliesstoffe" von H. Fuchs und W. Albrecht, Wiley-VCH, 2. Auflage 2012 erläutert und definiert sind. Dieser Abschnitt wird hier durch Bezugnahme aufgenommen. Die Ablage des staub- und/oder faserförmige recyclierten Materials und/oder der Samenfasern zusammen mit den Bindefasern kann insbesondere mittels des Airlay- oder des Airlaid-Verfahrens erfolgen. Die Airlay-Vliesbildung kann beispielsweise mittels eines Rando Webbers erfolgen.

In einer bevorzugten Ausführungsform ist vorgesehen, dass die mindestens eine staubund/oder faserförmiges recycliertes Material und/oder Samenfasern umfassende Lage des Vliesstoffes bis zu 95 Gew.-%, bevorzugt 70 bis 90 Gew.-% des staub- und/oder faserförmigen recyclierten Materials und/oder Samenfasern und mindestens 5 Gew.-%, bevorzugt 10 bis 50 Gew.-% an Bindefasern, insbesondere Bikomponentenfasern umfasst oder hieraus besteht. Die Bindefasern können dabei z.B. sogenannte "Fusing Fibers" (Schmelzfasern) darstellen, die aus thermoplastischen, schmelzbaren Materialien gebildet sind. Diese Fusing Fibers schmelzen bei der thermischen Aktivierung auf und binden das staub- und/oder faserförmige recyclierte Material bzw. die Samenfasern.

Die bevorzugt als Bindefasern eingesetzten Fusing Fibers oder Bikomponentenfasern können dabei teilweise oder vollständig aus recyclierten Kunststoffen bestehen. Die Bindefasern können gekräuselt ("crimped") oder glatt (ungekräuselt) sein. Die gekräuselten Bindefasern können mechanisch gekräuselt sein oder selbstkräuselnd (bspw. in Form von Bikomponentenfasern mit exzentrischem Querschnitt) ausgebildet sein.

Insbesondere vorteilhaft sind Bikomponentenfasern, deren Kern aus recycliertem Polyethylenterephthalat (rPET) oder recycliertem Polypropylen (rPP) besteht, die Hülle besteht dabei aus Polypropylen, bei dem es sich um "virgin" oder ebenso um ein recycliertes Material handeln kann.

In einer bevorzugten Ausführungsform sind die Bindefasern Stapelfasern, insbesondere mit einer Länge von 1 bis 100 mm, bevorzugt 2 bis 40 mm. Die Faserlänge kann gemäß DIN 53808-1:2003-01 bestimmt werden.

Besonders bevorzugt ist der recyclierte Kunststoff dabei ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder-chips. Ebenso können die Kunststoff-Recyclate metallisiert sein, z.B. wenn die Recyclate aus metallischen Kunststofffolien erhalten wurden, insbesondere metallisierten PET-Folien (MPET).

Bei dem recyclierten Kunststoff handelt es sich insbesondere um recycliertes Polyethylenterephthalat (rPET), das beispielsweise aus Getränkeflaschen, insbesondere aus sog. Bottleflakes, also Stücke gemahlener Getränkeflaschen, erhalten wurde.

Die recyclierten Kunststoffe, insbesondere das recyclierte PET, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können.

Bevorzugt ist es, wenn das luftdurchlässige Material mehrlagig aufgebaut ist, wobei mindestens eine, mehrere oder sämtliche der Lagen einen Vliesstoff und/oder ein Faservlies umfassen oder hieraus gebildet sind, wobei der Vliesstoff bzw. das Faservlies Fasern umfasst oder hieraus besteht, die aus einem recyclierten Kunststoff oder mehreren recyclierten Kunststoffen gebildet sind.

Insgesamt kann der Aufbau der Wandung des Filterbeutels gemäß der vorliegenden Erfindung ebenso ausgestaltet sein, wie in der EP 1 795 247 beschrieben. Eine derartige Wandung umfasst somit mindestens drei Lagen, wobei mindestens zwei Lagen aus mindestens einer Vliesstofflage und mindestens einer Faservlieslage, enthaltend Stapelfasern und/oder Filamente bestehen. Die Wandung des Staubsaugerfilterbeutels zeichnet sich demnach zusätzlich durch eine Schweißverbindung aus, bei der sämtliche Lagen des Filtermaterials durch Schweißverbindungen miteinander verbunden sind. Der Pressflächenanteil des Schweißmusters beträgt dabei maximal 5 % der Oberfläche der durchströmbaren Fläche des Filtermaterials bzw. Staubsaugerfilterbeutels. Bezogen auf die gesamte durchströmbare Fläche des Filterbeutels liegen durchschnittlich maximal 19 Schweißverbindungen pro 10 cm² vor.

Beispielsweise kann das luftdurchlässige Material in einer Weise ausgestaltet sein, wie es im einleitenden Teil der vorliegenden Patentanmeldung beschrieben ist, also z.B. wie in EP 1 198 280, EP 2 433 695, EP 1 254 693, DE 199 19 809, EP 1 795 247, WO 2013/106 392 oder CN 101747596 beschrieben, solange ein Kunststoff-Recyclat für die Herstellung dieser Filtermaterialien verwendet wurde. Bezüglich des detaillierten Aufbaus dieser Filtermaterialien wird auf den Offenbarungsgehalt dieser Druckschriften verwiesen, die in dieser Hinsicht auch zum Offenbarungsgehalt der vorliegenden Erfindung zu zählen sind.

Die vorliegende Erfindung erfasst mehrere besonders bevorzugte Möglichkeiten der mehrlagigen Ausgestaltung des luftdurchlässigen Materials, die nachfolgend vorgestellt werden. Die Mehrzahl dieser Lagen kann mittels Schweißverbindungen, insbesondere wie in der EP 1 795 427 A1 beschrieben, miteinander verbunden sein. Die Lagen können untereinander auch verklebt oder wie in WO 01/003802 beschrieben gebondet sein.

Die Erfindung stellt insbesondere einen Staubsaugerfilterbeutel mit einer Wandung aus luftdurchlässigem Material bereit, wobei das Material eine Kapazitätslage und eine Feinfilterlage umfasst,
wobei die Kapazitätslage ein mittels eines aerodynamischen Verfahrens erzeugter Vliesstoff aus Stapelfasern ist, wobei die Stapelfasern aus einem recyclierten Kunststoff oder mehreren recyclierten Kunststoffen gebildet sind, und
wobei die Feinfilterlage ein Meltblown-Vliesstoff aus virgin PP ist, der insbesondere elektrostatisch geladen ist, oder ein Meltblown-Vliesstoff aus Bikomponentenfasern mit einem rPET- oder einem rPP-Kern und einer Hülle aus virgin PP oder virgin PMP ist oder eine Trägerschicht aus recyclierten Kunststofffasern mit einer darauf aufgebrachten Schicht aus Nanofasern ist.

Die Kapazitätslage kann also der bereits oben beschriebenen Lage aus Vliesstoff bzw. Faservlies entsprechen.

Die Stapelfasern der Kapazitätslage können insbesondere rPET oder rPP umfassen oder daraus bestehen.

Der Begriff "Nanofaser" wird gemäß der Terminologie der DIN SPEC 1121:2010-02 (CEN ISO/TS 27687:2009) verwendet.

Die Feinfilterlage kann in Luftströmungsrichtung (von der Dreckluftseite zur Reinluftseite hin) hinter der Kapazitätslage angeordnet sein.

Optional kann der Staubsaugerfilterbeutel eine (zusätzliche) Verstärkungslage bzw. Stützlage in Form einer trockengelegten Vliesstofflage oder in Form einer Extrusions-Vliesstofflage aufweisen. Die trockengelegte Vliesstofflage kann - wie oben beschrieben - staub- und/oder faserförmiges recycliertes Material aus der Herstellung von Textilien, insbesondere Baumwolltextilien, und/oder aus der Wollschur und/oder Samenfasern umfassen; alternativ kann die trockengelegte Vliesstofflage Stapelfasern aus rezykliertem Kunststoff, inbesondere rPET oder rPP, umfassen. Die Extrusions-Vliesstofflage kann Mono- oder Bikomponenten-Filamente aus rezykliertem Kunststoff, inbesondere rPET oder rPP, umfassen.

Die Verstärkungslage kann in Luftströmungsrichtung hinter der Feinfilterlage angeordnet sein.

Gemäß einer Ausführungsform umfasst das luftdurchlässige Material mindestens eine Stützlage und mindestens eine Feinfilterlage, wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind, darstellen.

Gemäß einer alternativen Ausführungsform umfasst das luftdurchlässige Material mindestens eine Stützlage und mindestens eine Kapazitätslage, wobei mindestens eine oder sämtliche der Stützlagen Vliesstoffe und/oder mindestens eine oder sämtliche der Kapazitätslagen Vliesstoffe oder Faservliese, die aus einem recyclierten Kunststoff oder mehreren recyclierten Kunststoffen gebildet sind, darstellen.

Eine weitere Ausführungsform sieht vor, dass das luftdurchlässige Material mindestens eine Stützlage, mindestens eine Feinfilterlage und mindestens eine Kapazitätslage wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind und/oder mindestens eine oder sämtliche der Kapazitätslagen Vliesstoffe oder Faservliese, die aus einem recyclierten Kunststoff oder mehreren recyclierten Kunststoffen gebildet sind, darstellen.

Bei den genannten Ausführungsführungsformen ist es ebenso möglich, dass mindestens eine, bevorzugt sämtliche der Kapazitätslagen einen Vliesstoff, der staub- und/oder faserförmiges recycliertes Material und/oder Samenfasern umfasst, umfassen oder hieraus gebildet sind. Durch die erfolgte Vliesbindung weist die als Kapazitätslage ausgebildete Vliesstofflage dabei eine derart hohe mechanische Festigkeit auf, dass sie auch als Stützlage fungieren kann.

Ebenso ist es möglich die Außenlage auf der Reinluftseite aus einem relativ dünnen Material auf Basis Baumwollstaub zu machen.

Die einzelnen Lagen sind dabei entsprechend ihrer Funktion näher bezeichnet.

Eine Stützlage (manchmal auch "Verstärkungslage" genannt) im Sinne der vorliegenden Erfindung ist dabei eine Lage, die dem mehrlagigen Verbund des Filtermaterials die notwendige mechanische Festigkeit verleiht. Hierunter wird ein offener, poröser Vliesstoff bzw. ein Nonwoven mit leichtem Flächengewicht bezeichnet. Eine Stützlage dient unter anderem dazu, andere Lagen oder Schichten zu stützen und/oder vor Abrasion zu schützen. Die Stützlage kann auch die größten Partikel filtern. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Kapazitätslage bietet einen hohen Widerstand gegenüber Stoßbelastung, Filtern von großen Schmutzpartikeln, Filtern eines signifikanten Anteils von kleinen Staubpartikeln, Speichern bzw. Zurückhalten von großen Mengen an Partikeln, wobei der Luft ein einfaches Durchströmen erlaubt wird und somit ein geringer Druckabfall bei hoher Partikelbeladung resultiert. Dies wirkt sich insbesondere auf die Standzeit eines Staubsaugerfilterbeutels aus.

Eine Feinfilterlage dient der Erhöhung der Filtrationsleistung des mehrlagigen Filtermaterials durch Einfangen von Partikeln, die beispielsweise durch die Stützlage und/oder die Kapazitätslage hindurch gelangen. Zur weiteren Erhöhung der Abscheideleistung kann die Feinfilterlage bevorzugt elektrostatisch (z.B. durch Coronaentladung oder Hydrocharging) aufgeladen werden, um insbesondere die Abscheidung von Feinstaubpartikeln zu erhöhen.

Einen Überblick über die einzelnen Funktionslagen innerhalb mehrlagiger Filtermaterialien für Staubsaugerfilterbeutel bietet die WO 01/003802. Das luftdurchlässige Material der Wandung des erfindungsgemäßen Staubsaugerfilterbeutels kann hinsichtlich seiner Konstruktion beispielsweise wie in diesem Patentdokument aufgebaut sein mit der Maßgabe, dass zumindest eine der Lagen des dort beschriebenen mehrlagigen Filtermaterials für den Staubsaugerfilterbeutel aus einem recyclierten bzw. mehreren recyclierten Kunststoffen gebildet ist. Der Offenbarungsgehalt der WO 01/003802 wird hinsichtlich des Aufbaus der luftdurchlässigen Filtermaterialien ebenso in die vorliegende Anmeldung mit aufgenommen.

Bei den zuvor genannten Ausführungsformen ist es vorteilhaft, dass jede Stützlage ein Spinnvlies oder Scrim ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bzw. das Scrim bildenden Fasern im Bereich von 0,5 dtex bis 15 dtex.

Das luftdurchlässige Material kann dabei vorzugsweise ein bis drei Stützlagen umfassen.

Im Falle des Vorhandenseins mindestens zweier Stützlagen beträgt die Gesamtgrammatur der Summe aller Stützlagen vorzugsweise 10 bis 240 g/m², weiter bevorzugt 15 bis 150 g/m², weiter bevorzugt 20 bis 100 g/m², weiter bevorzugt 30 bis 90 g/m², insbesondere 40 bis 70 g/m².

Insbesondere ist es bevorzugt, dass sämtliche Stützlagen aus einem recyclierten Kunststoff oder mehreren recyclierten Kunststoffen, insbesondere aus rPET oder rPP, gebildet sind.

Gemäß einer weiteren vorteilhaften Ausgestaltungsform ist jede Feinfilterlage ein Extrusionsvliesstoff, insbesondere ein Meltblown-Vliesstoff, vorzugsweise mit einer Grammatur von 5 bis 100 g/m², weiter bevorzugt 10 bis 50 g/m², insbesondere 10 bis 30 g/m².

Hierbei ist es möglich, dass das luftdurchlässige Material 1 bis 5 Feinfilterlagen umfasst.

Im Falle des Vorhandenseins mindestens zweier Feinfilterlagen beträgt die Gesamtgrammatur der Summe aller Feinfilterlagen vorzugsweise 10 bis 300 g/m², weiter bevorzugt 15 bis 150 g/m², insbesondere 20 bis 50 g/m².

Insbesondere ist es bevorzugt, wenn mindestens eine, bevorzugt sämtliche Feinfilterlagen aus einem recyclierten Kunststoff oder mehreren recyclierten Kunststoffen, insbesondere aus rPET gebildet sind.

Zur Erhöhung der Staubabscheideleistung, insbesondere mit Hinblick auf Feinststäube ist es besonders bevorzugt, wenn mindestens eine, bevorzugt sämtliche Feinfilterlagen elektrostatisch aufgeladen sind.

Weiter vorteilhaft ist es, wenn jede Kapazitätslage ein Stapelfaservliesstoff, ein Faservlies oder ein Vliesstoff, der staub- und/oder faserförmiges recycliertes Material aus der Herstellung von Textilien, insbesondere Baumwolltextilien, und/oder aus der Wollschur und/oder Samenfasern umfasst ist, wobei jede Kapazitätslage vorzugsweise eine Grammatur von 5 bis 200 g/m², weiter bevorzugt von 10 bis 150 g/m², weiter bevorzugt von 20 bis 100 g/m², insbesondere 30 bis 50 g/m² aufweist.

Hierbei kann es gegeben sein, dass das luftdurchlässige Material 1 bis 5 Kapazitätslagen umfasst.

Im Falle des Vorhandenseins mindestens zweier Kapazitätslagen beträgt die Gesamtgrammatur der Summe aller Kapazitätslagen vorzugsweise 10 bis 300 g/m², weiter bevorzugt 15 bis 200 g/m², weiter bevorzugt 20 bis 100 g/m², insbesondere 50 bis 90 g/m².

Eine besonders bevorzugte Ausführungsform des Aufbaus des luftdurchlässigen Materials für den erfindungsgemäßen Staubsaugerfilterbeutel sieht den nachfolgend beschriebenen mehrlagigen Aufbau vor mit einer vom Innenraum des Staubsaugerfilterbeutels (Dreckluftseite) nach außen (Reinluftseite) verlaufenden Lagenfolge:
Eine Stützlage, mindestens eine, vorzugsweise mindestens zwei Feinfilterlagen sowie eine weitere Stützlage.

Insbesondere für den Fall, dass die Stützlage als Spunbond-Vliesstoff und die Feinfilterlage als Meltblown-Vliesstoff aufgebaut ist, entspricht dieser Aufbau dem aus dem Stand der Technik bekannten SMS- bzw. SMMS-Aufbau für luftdurchlässige Filtermaterialien für Staubsaugerfilterbeutel.

Alternativ und insbesondere ist der folgende Aufbau bevorzugt: Eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage. Für den Fall, dass die Kapazitätslage eine wie voran beschrieben hohe mechanische Festigkeit aufweist, kann dabei auch auf die innerste Stützlage verzichtet werden

Eine oder zwei Kapazitätslagen, eine oder zwei Feinfilterlagen (Meltblownlagen), eine Stützlage (Spinnvlies).

Eine oder zwei Kapazitätslagen, eine oder zwei Feinfilterlagen (Meltblownlagen), eine oder zwei Kapazitätslagen.

Mindestens eine der Lagen umfasst dabei mindestens ein recycliertes Kunststoffmaterial, insbesondere rPET oder rPP. Besonders bevorzugt sind zumindest sämtliche Stützlagen aus recyclierten Kunststoffen gebildet.

Jede der zuvor genannten Lagen (Stützlage, Kapazitätslage, Feinfilterlage) kann dabei auch aus einem Vliesstoffmaterial gebildet sein, das staub- und/oder faserförmiges recycliertes Material aus der Herstellung von Textilien, insbesondere Baumwolltextilien, und/oder aus der Wollschur und/oder Samenfasern umfasst.

In einer besonders bevorzugten Ausführungsform bildet dieses Vliesstoffmaterial die mindestens eine Kapazitätslage, während die anderen Lagen kein staub- und/oder faserförmiges recycliertes Material aus der Herstellung von Textilien, insbesondere Baumwolltextilien und/oder Samenfasern umfassen.

Es können sämtliche Lagen bei den zuvor genannten Ausführungsformen auch mittels Schweißverbindungen, insbesondere wie in EP 1 795 427 A1 beschrieben, miteinander verbunden sein. Schweißverbindungen sind allerdings nicht zwingend notwendig.

Gemäß einer weiter bevorzugten Ausführungsform weist der Staubsaugerfilterbeutel eine die Einlassöffnung einfassende Halteplatte auf, die aus einem oder mehreren recycelten Kunststoffen gebildet ist oder einen oder mehrere recycelte Kunststoffe umfasst. Insbesondere ist die Halteplatte dabei aus rPET oder rPP gebildet oder umfasst rPET oder rPP zu einem sehr hohen Anteil, beispielsweise zu mindestens 90 Gew.%. Gemäß dieser bevorzugten Ausführungsform ist somit eine weitere Erhöhung des Anteils an recyclierten Kunststoffen im Staubsaugerfilterbeutel möglich.

Weiterhin ist es möglich, dass im Innenraum mindestens ein Strömungsverteiler und/oder mindestens ein Diffusor angeordnet sind, wobei bevorzugt der mindestens einen Strömungsverteiler und/oder der mindestens eine Diffusor aus einem recyclierten Kunststoff oder mehreren recyclierten Kunststoffen gebildet ist. Derartige Strömungsverteiler bzw. Diffusoren sind z.B. in den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen.

Eine weitere besonders bevorzugte Ausführungsform sieht vor, dass der Gewichtsanteil aller recycelten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können die Anforderungen des Global Recycled Standard (GRS), v3 (August 2014) von Textile Exchange erreicht werden.

Der Staubsaugerfilterbeutel gemäß der vorliegenden Erfindung kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Seitenfaltenbeutel stellen eine modifizierte Form eines Flachbeutels dar und umfassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Zudem betrifft die vorliegende Erfindung die Verwendung von recyclierten Kunststoffen, insbesondere den voranstehend beschriebenen recyclierten Kunststoffen, beispielsweise in Form von Vliesstoffen und/oder Faservliesen für Staubsaugerfilterbeutel. Hinsichtlich der hierfür verwendbaren recyclierten Kunststoffe oder der möglichen Ausgestaltung der Vliesstoffe bzw. Faservliese wird diesbezüglich auf die voranstehenden Ausführungen verwiesen.

Die vorliegende Erfindung wird anhand der nachfolgenden beispielhaften Ausführungen näher beleuchtet, ohne die Erfindung auf die speziellen dargestellten Ausführungen zu beschränken. Es werden Filterbeutel konzipiert, die eine oder mehrere Lagen rPET- oder rPP-Filamente oder rPET- oder rPP-Stapelfasern aufweisen. Zusätzlich können die nachfolgend beschriebenen erfindungsgemäßen Filterbeutel eine oder mehrere Lagen aus einem aerodynamisch gebildeten Vliesstoff, beispielsweise einen Airlaid- oder einen Airlay-Vliesstoff aufweisen, der aus Baumwollstaub, Samenfasern oder Wollfasern aus Schurabfällen und Bicomponentenfasern gebildet wird. Die unterschiedlichen Vliesstoffe sind dabei nur für bestimmte Materiallagen geeignet. Um den Anteil an wiederverwerteten Rohstoffen noch weiter zu steigern, ist zusätzlich noch der Einsatz einer Halteplatte möglich, die aus rPET oder rPP besteht oder zumindest rPET oder rPP aufweist.

Zu den einzelnen Filterlagen:
Als Stützlagen kommen insbesondere Spinnvlieslagen aus rPET oder rPP mit einem Flächengewicht von 5 bis 50 g/m² und einem Titer von 1 dtex bis 15 dtex in Frage. Als Rohstoff werden beispielsweise PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

Als Feinfilterlagen werden eine oder mehrere Lagen Meltblown aus rPET oder rPP mit einem Flächengewicht von jeweils 5 bis 30 g/m² eingesetzt. Zusätzlich können noch eine oder mehrere Meltblown Vliesstofflagen aus virgin PP vorhanden sein. Zumindest diese Lage(n) werden durch eine Coronaentladung elektrostatisch aufgeladen. Die Lagen aus rPET oder rPP können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bicomponentenfasern bestehen, bei denen der Kern aus rPET oder rPP und die Hülle aus einem Kunststoff, der sich besonders gut elektrostatisch aufladen lässt (z. B. virgin PP, PC, PET), gebildet wird.

Eine oder mehrere Kapazitätslagen enthalten rPET- oder rPP-Stapelfasern oder rPET- oder rPP-Filamente oder werden auf Basis von Baumwollstaub (oder Samenfasern) und Bicomponentenfasern hergestellt. Zur Herstellung von Kapazitätslagen sind unterschiedliche Verfahren geeignet. Gebräuchlich sind Kardierverfahren, Airlay-Verfahren oder Airlaidverfahren, bei denen zunächst Stapelfasern abgelegt werden, die dann für gewöhnlich in einem Vliesbindeschritt (z. B. durch Vernadelung, Wasserstrahlverfestigung, Ultraschallkalandrierung, mittels thermischer Verfestigung im Durchströmofen auch mittels Bikomponentenfasern oder Bindefasern, oder durch chemische Verfestigung, beispielsweise mit Latex, Hotmelt, Schaumbinder, ...) zu einem Vliesstoff verfestigt werden. Zur Kalandrierung ist insbesondere das HELIX® (Comerio Ercole) Verfahren vorteilhaft. Bei einem Airlay-Verfahren kann insbesondere eine Rando-Webber-Anlage verwendet werden.

Ebenfalls eingesetzt wird ein Verfahren, bei dem das primär entstandene Faservlies nicht verfestigt wird, sondern mit möglichst wenigen Schweißpunkten an einen Vliesstoff gebunden wird. Bei beiden Verfahren ist es möglich, Stapelfasern aus rPET oder rPP zu verwenden. Kapazitätslagen können auch als Extrusionsvliesstoffe oder Extrusionsfaservliese gefertigt werden. Für diese Vliesstoffe ist ein Einsatz von rPET oder rPP ebenfalls problemlos realisierbar.

Die Filamente oder Stapelfasern können auch aus Bikomponentenmaterialien bestehen, bei denen der Kern aus rPET oder rPP und die Hülle aus einem Kunststoff, der sich besonders gut elektrostatisch aufladen lässt (z. B. virgin PP, PC, PET) gebildet wird.

Alternativ oder ergänzend können auch eine oder mehrere Lagen eines aerodynamisch gebildeten Vliesstoffes vorhanden sein, der aus Bikomponentenfasern und Baumwollstaub oder Samenfasern gebildet wird.

Das Flächengewicht der einzelnen Kapazitätslagen liegt bevorzugt zwischen 10 und 100 g/m².

Die unterschiedlich hergestellten Kapazitätslagen können selbstverständlich auch miteinander kombiniert werden.

Um den Anteil an Recyclaten weiter zu erhöhen, ist die Verwendung einer Halteplatte aus rPET möglich. Wenn die Abdichtung zum Staubsaugerstutzen durch das Beuteilmaterial übernommen wird, kann die Halteplatte ausschließlich aus rPET oder rPP bestehen. Für den Fall, dass die Halteplatte die Dichtfunktion übernehmen muss, kann eine TPE-Dichtung angespritzt oder angeklebt werden.

Bei Ausnutzung aller Möglichkeiten wird so ein Anteil an Recyclaten bzw. Abfallstoffen von bis zu 96 % möglich. Die folgenden Tabellen geben einige konkrete Ausführungsbeispiele mit einem Recyclatanteil von 41 % bis 96 %.

Aus den verschiedenen Recyclat-haltigen Vliesstoffen bzw. Faservliesen wurden die nachfolgend dargestellten Staubsaugerfilterbeutel unter Verwendung der angegebenen Materialien konzipiert, deren genaue Zusammensetzung bzw. deren Aufbau in den nachfolgenden Tabellen wiedergegeben ist. Die Staubsaugerfilterbeutel stellen dabei Flachbeutel von rechteckiger Geometrie dar, die eine Abmessung von 300 mm x 280 mm aufweisen.

### Beispiel 1

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage innen | 17 | 2,9 | 100 |
| Halteplatte | | 5,0 | 0 |
| Filterbeutel gesamt | | 17,1 | **41,3** |

Das luftdurchlässige Material des Staubsaugerfilterbeutels gemäß Beispiel 1 weist einen vierlagigen Aufbau auf, wobei die äußerste Lage (reinluftseitig) eine Stützlage mit einer Grammatur von 25 g/m² aufweist. Die innerste Lage ist ebenso eine Stützlage mit einer Grammatur von 17 g/m². Zwischen den beiden Stützlagen sind zwei Lagen einer Feinfilterlage (Meltblown aus Virgin-Polypropylen, jeweils durch Coronaentladung elektrostatisch aufgeladen) mit einer jeweiligen Grammatur von 15 g/m² angeordnet. Die Stützlagen sind dabei jeweils aus 100 % recyceltem PET gebildet. Die dritte Spalte gibt das Absolutgewicht der jeweiligen Lage im Staubsaugerfilterbeutel an. Der Staubsaugerfilterbeutel weist dabei eine Halteplatte auf, die 5,0 g schwer ist und mit dem Staubsaugerfilterbeutel verschweißt ist.

Mit einem derartigen Aufbau kann ein Anteil an einem recycliertem Material im gesamten Staubsaugerfilterbeutel von 41,3 % erzielt werden.

### Beispiel 2

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage innen | 17 | 2,9 | 100 |
| Halteplatte | | 5,0 | 100 |
| Filterbeutel gesamt | | 17,1 | **70,5** |

Der Staubsaugerfilterbeutel gemäß Beispiel 2 ist identisch aufgebaut, wie der Staubsaugerfilterbeutel gemäß Beispiel 1 mit dem Unterschied, dass die Halteplatte zu 100 % aus recyceltem Polyethylenterephthalat (rPET) gebildet ist. Durch diese Maßnahme kann der Anteil an Recyclat im gesamten Staubsaugerfilterbeutel auf 70,5 % erhöht werden.

### Beispiel 3

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 100 |
| Stützlage innen | 17 | 2,9 | 100 |
| Halteplatte | | 5,0 | 100 |
| Filterbeutel gesamt | | 17,1 | **85,3** |

Der Staubsaugerfilterbeutel gemäß Beispiel 3 ist identisch aufgebaut, wie Beispiel 2. Eine Feinfilterlage (innere Meltblownlage) ist im Unterschied zum Ausführungsbeispiel gemäß Beispiel 2 oder Beispiel 1 nunmehr ebenso aus 100 % recyceltem PET gebildet. Das verwendete rPET kann dabei metallisiert oder unmetallisiert sein. Für den Fall, dass unmetallisiertes rPET verwendet wird, ist es ebenso möglich, dieses Meltblown elektrostatisch aufzuladen, beispielsweise mittels Coronaentladung.

### Beispiel 4

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 85 |
| Meltblown | 15 | 2,5 | 85 |
| Stützlage innen | 17 | 2,9 | 100 |
| Halteplatte | | 5,0 | 100 |
| Filterbeutel gesamt | | 17,1 | **95,6** |

Der Staubsaugerfilterbeutel gemäß Beispiel 4 ist dabei identisch aufgebaut, wie der Staubsaugerfilterbeutel nach Beispiel 2, bis auf die Tatsache, dass die beiden Feinfilterlagen (Meltblown) aus BiKo-Filamenten gebildet sind. Der Kern dieser Meltblown-Filamente besteht dabei aus recycliertem PET, die Hülle aus neuem (virgin) Polypropylen. Der Kern macht dabei einen Gewichtsanteil von 85 % aus.

Mit derartigen Maßnahmen wird ein Recyclat-Anteil von 95,6 Gew.-%, bezogen auf den gesamten Staubsaugerfilterbeutel erreicht.

### Beispiel 5

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 50 |
| Kapazitätslage B | 35 | 5,9 | 50 |
| Stützlage innen | 15 | 2,5 | 100 |
| Halteplatte | | 5,0 | 0 |
| Filterbeutel gesamt | | 31,4 | **49,3** |

Das Wandungsmaterial des Staubsaugerfilterbeutels gemäß Beispiel 5 weist einen 7-lagigen Aufbau auf. An eine auf der Reinluftseite angeordnete äußere Stützlage schließen sich zwei Feinfilterlagen (jeweils Meltblownlagen, wie in Beispiel 1) an. Eine mittig angeordnete Stützlage separiert diese Feinfilterlagen von zwei Kapazitätslagen A und B, die jeweils einen kardierten Vliesstoff aus Bicomponenten-Stapelfasern darstellen. Diese Stapelfasern bestehen z.B. zu 50 % aus recycliertem Polyethylenterephthalat (rPET), das den Kern dieser Fasern bildet. Der Kern ist von einer Hülle aus "vigin" PP umgeben. Abschließend folgt eine auf der Dreckluftseite angeordnete Stützlage.

Beim Aufbau nach Beispiel 5 sind sämtliche Stützlagen des luftdurchlässigen Materials aus recycliertem PET (rPET) gebildet. Die Kapazitätslagen sind zu 50 % aus recycliertem PET gebildet. Mit einem derartigen Aufbau wird ein Anteil von 49,3 Gew.-% an Recyclat, bezogen auf den Gesamtstaubsaugerfilterbeutel erreicht.

### Beispiel 6

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage B | 35 | 5,9 | 100 |
| Stützlage innen | 15 | 2,5 | 100 |
| Halteplatte | | 5,0 | 0 |
| Filterbeutel gesamt | | 31,4 | **68,0** |

Der Staubsaugerfilterbeutel gemäß Beispiel 6 ist dabei identisch aufgebaut, wie Beispiel 5. Im Unterschied zur Ausführungsform gemäß Beispiel 5 sind nunmehr auch die Kapazitätslagen A und B zu 100 % aus einem kardierten Stapelfaservliesstoff aus rPET-Stapelfasern gebildet.

Mit einer derartigen Ausführungsform wird ein Anteil an Recyclat von 68,0 Gew.-%, bezogen auf den gesamten Staubsaugerfilterbeutel erzielt.

### Beispiel 7

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage B | 35 | 5,9 | 100 |
| Stützlage innen | 15 | 2,5 | 100 |
| Halteplatte | | 5,0 | 100 |
| Filterbeutel gesamt | | 31,4 | **83,9** |

Beim Staubsaugerfilterbeutel gemäß Beispiel 7 ist nunmehr ebenso die Halteplatte zu 100 % aus recycliertem PET gebildet. Im Übrigen ist der Staubsaugerfilterbeutel dabei identisch aufgebaut wie Beispiel 6.

Bei einem derartigen Aufbau wird ein Gesamtgehalt an Recyclat, bezogen auf den gesamten Staubsaugerfilterbeutel von 83,9 Gew.-% erzielt.

### Beispiel 8

| **Volumenvlies 70** 300 mm x 280 mm | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 80 |
| Meltblown | 15 | 2,5 | 80 |
| Stützlage mittig | 17 | 2,9 | 100 |
| Kapazitätslage A | 35 | 5,9 | 100 |
| Kapazitätslage B | 35 | 5,9 | 100 |
| Stützlage innen | 15 | 2,5 | 100 |
| Halteplatte | | 5,0 | 100 |
| Filterbeutel gesamt | | 31,4 | **96,8** |

Der Staubsaugerfilterbeutel gemäß Beispiel 8 ist dabei identisch aufgebaut wie der von Beispiel 7, bis auf die Tatsache, dass auch die beiden Feinfilterlagen (Meltblownlagen) zu hohem Anteil aus recycliertem PET gebildet sind. Das Meltblown ist hierbei aus einem Bicomponenten-Meltblown gebildet mit einem Kern aus rPET, umhüllt von neuem Polypropylen. Der Anteil von rPET beträgt hierbei 80 Gew.-%, bezogen auf die Gesamtmasse des Meltblowns, das die jeweilige Feinfilterlage bildet.

Mit einer derartigen Ausgestaltungsform kann ein Gesamtgehalt von recyclierten Materialien, bezogen auf den gesamten Filterbeutel von 96,8 Gew.% erzielt werden.

### Beispiel 9

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | **60,5** |

Der Staubsaugerfilterbeutel gemäß Beispiel 9 ist dabei ebenso aus einem 7-lagigen luftdurchlässigen Material gebildet. Der Staubsaugerfilterbeutel weist dabei einen ähnlichen Aufbau wie der Staubsaugerfilterbeutel gemäß Beispiel 5 auf. Die Stützlagen sowie die Feinfilterlagen (Meltblownlagen) sind dabei identisch wie in Beispiel 5 ausgebildet. Die Kapazitätslage C und D ist dabei aus einem Vliesstoffmaterial gebildet, das zu 80 Gew.-% aus Baumwollstaub oder Samenfasern und zu 20 % aus BiCo-Bindefaser gebildet ist. Dieses Vliesstoffmaterial ist detailliert in der WO 2011/057641 A1 beschrieben. Der Anteil des Baumwollstaubs bzw. der Samenfasern in den Kapazitätslagen wird dabei zum Gesamtanteil ein Recyclat hinzugezählt.

Mit einer derartigen Ausführungsform wird ein Anteil von recycliertem Material, d. h. der Summe an recyclierten Kunststoffen, sowie Baumwollstaub bzw. Samenfasern von 60,5 Gew.-%, bezogen auf den gesamten Staubsaugerfilterbeutel erzielt.

### Beispiel 10

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | **64,3** |

Der Staubsaugerfilterbeutel gemäß Beispiel 10 ist dabei in Analogie zum Staubsaugerfilterbeutel gemäß Beispiel 9 aufgebaut. Die äußere Kapazitätslage entspricht dabei einer Kapazitätslage gemäß den Beispielen 6 bis 8, d. h. einem kardierten Stapelfaservliesstoff, der zu 100 % aus Fasern aus recyceltem PET gebildet ist. Der Recyclat-Anteil eines fertigen Staubsaugerfilterbeutels entspricht 64,3 Gew.-%.

### Beispiel 11

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **76,4** |

Der Staubsaugerfilterbeutel gemäß Beispiel 11 entspricht einem Staubsaugerfilterbeutel gemäß Beispiel 9, mit dem Unterschied, dass die Halteplatte zu 100 % aus rPET gebildet ist. Der Gesamtanteil an recyclierten Materialien in diesem Staubsaugerfilterbeutel beträgt 76,4 Gew.-%.

### Beispiel 12

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 80 |
| Meltblown | 15 | 2,5 | 80 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **89,3** |

Der Staubsaugerfilterbeutel gemäß Beispiel 12 entspricht dem Staubsaugerfilterbeutel gemäß Beispiel 11, mit dem Unterschied, dass die beiden Feinfilterlagen entsprechend den Feinfilterlagen nach Beispiel 8 ausgestaltet sind und somit aus einem Bicomponenten-Meltblown mit einem Kern aus rPET und einer Hülle aus Polypropylen gebildet sind. Der Gesamtanteil an Recyclat eines derartigen Staubsaugerfilterbeutels beträgt 89,3 Gew.-%.

## Patentansprüche

1. Staubsaugerfilterbeutel, umfassend einen Innenraum umschließende Wandung aus einem luftdurchlässigen Material sowie eine in die Wandung eingebrachte Einlassöffnung, **dadurch gekennzeichnet, dass**
das luftdurchlässige Material mindestens eine Lage eines Vliesstoffes und/oder eine Lage aus einem Faservlies umfasst, der bzw. das Fasern umfasst oder hieraus besteht, die aus einem recyclierten Kunststoff oder mehreren recyclierten Kunststoffen gemäß der Norm DIN EN 15347:2007 gebildet sind.

2. Staubsaugerfilterbeutel nach Anspruch 1, wobei der recyclierte Kunststoff ausgewählt ist aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

3. Staubsaugerfilterbeutel nach einem der vorhergehenden Ansprüche, wobei das luftdurchlässige Material mehrlagig aufgebaut ist, wobei mindestens eine, mehrere oder sämtliche der Lagen einen Vliesstoff und/oder ein Faservlies umfassen oder hieraus gebildet sind, wobei der Vliesstoff bzw. das Faservlies Fasern umfasst oder hieraus besteht, die aus einem recyclierten Kunststoff oder mehreren recyclierten Kunststoffen gebildet sind.

4. Staubsaugerfilterbeutel nach einem der vorhergehenden Ansprüche, wobei das luftdurchlässige Material eine Kapazitätslage und eine Feinfilterlage umfasst,
wobei die Kapazitätslage ein mittels eines aerodynamischen Verfahrens erzeugter Vliesstoff aus Stapelfasern ist, wobei die Stapelfasern aus einem recyclierten Kunststoff oder mehreren recyclierten Kunststoffen gebildet sind, und
wobei die Feinfilterlage ein Meltblown-Vliesstoff aus virgin PP ist, der insbesondere elektrostatisch geladen ist, oder ein Meltblown-Vliesstoff aus Bikomponentenfasern mit einem rPET- oder einem rPP-Kern und einer Hülle aus virgin PP oder virgin PMP ist oder eine Trägerschicht aus recyclierten Kunststofffasern mit einer darauf aufgebrachten Schicht aus Nanofasern ist

5. Staubsaugerfilterbeutel nach einem der vorhergehenden Ansprüche, wobei das luftdurchlässige Material
mindestens eine Stützlage und mindestens eine Feinfilterlage, wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind, darstellen,
oder
mindestens eine Stützlage und mindestens eine Kapazitätslage, wobei mindestens eine oder sämtliche der Stützlagen Vliesstoffe und/oder mindestens eine oder sämtliche der Kapazitätslagen Vliesstoffe oder Faservliese, die aus einem recyclierten Kunststoff oder mehreren recyclierten Kunststoffen gebildet sind, darstellen,
oder
mindestens eine Stützlage, mindestens eine Feinfilterlage und mindestens eine Kapazitätslage wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind und/oder mindestens eine oder sämtliche der Kapazitätslagen Vliesstoffe oder Faservliese, die aus einem recyclierten Kunststoff oder mehreren recyclierten Kunststoffen gebildet sind, darstellen,
umfasst.

6. Staubsaugerfilterbeutel nach vorhergehendem Anspruch, wobei
e) jede Stützlage ein Spinnvlies oder Scrim ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bzw. das Scrim bildenden Fasern im Bereich von 0,5 dtex bis 15 dtex,
f) das luftdurchlässige Material 1 bis 3 Stützlagen umfasst,
g) im Falle des Vorhandenseins mindestens zweier Stützlagen die Gesamtgrammatur der Summe aller Stützlagen 10 bis 240 g/m², bevorzugt 15 bis 150 g/m², weiter bevorzugt 20 bis 100 g/m², weiter bevorzugt 30 bis 90 g/m², insbesondere 40 bis 70 g/m² beträgt, und/oder
h) sämtliche Stützlagen aus einem recyclierten Kunststoff oder mehreren recyclierten Kunststoffen, insbesondere aus rPET gebildet sind.

7. Staubsaugerfilterbeutel nach einem der beiden vorhergehenden Ansprüche, wobei
f) jede Feinfilterlage ein Extrusionsvliesstoff, insbesondere ein Meltblown-Vliesstoff ist, vorzugsweise mit einer Grammatur von 5 bis 100 g/m², bevorzugt 10 bis 50 g/m², insbesondere 10 bis 30 g/m²,
g) das luftdurchlässige Material 1 bis 5 Feinfilterlagen umfasst,
h) im Falle des Vorhandenseins mindestens zweier Feinfilterlagen die Gesamtgrammatur der Summe aller Feinfilterlagen 10 bis 300 g/m², bevorzugt 15 bis 150 g/m², insbesondere 20 bis 50 g/m² beträgt,
i) mindestens eine, bevorzugt sämtliche Feinfilterlagen aus einem recyclierten Kunststoff oder mehreren recyclierten Kunststoffen, insbesondere aus rPET gebildet sind und/oder
j) mindestens eine, bevorzugt sämtliche Feinfilterlagen elektrostatisch aufgeladen sind.

8. Staubsaugerfilterbeutel nach einem der Ansprüche 5 bis 7, wobei
d) jede Kapazitätslage ein Stapelfaservliesstoff, ein Faservlies oder ein Vliesstoffes, der staub- und/oder faserförmiges recycliertes Material aus der Herstellung von Textilien, insbesondere Baumwolltextilien und/oder Samenfasern umfasst ist, wobei jede Kapazitätslage vorzugsweise eine Grammatur von 5 bis 200 g/m², weiter bevorzugt von 10 bis 150 g/m², weiter bevorzugt von 20 bis 100 g/m², insbesondere 30 bis 50 g/m² aufweist,
e) das luftdurchlässige Material 1 bis 5 Kapazitätslagen umfasst, und/oder
f) im Falle des Vorhandenseins mindestens zweier Kapazitätslagen die Gesamtgrammatur der Summe aller Kapazitätslagen 10 bis 300 g/m², bevorzugt 15 bis 200 g/m², weiter bevorzugt 20 bis 100 g/m², insbesondere 50 bis 90 g/m² beträgt.

9. Staubsaugerfilterbeutel nach einem der vorhergehenden Ansprüche, wobei das luftdurchlässige Material mehrlagig ausgebildet ist mit einer vom Innenraum des Staubsaugerfilterbeutels aus gesehenen Lagenfolge:
eine Stützlage, mindestens eine, vorzugsweise mindestens zwei Feinfilterlagen sowie eine weitere Stützlage,
oder
eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage.

10. Staubsaugerfilterbeutel nach einem der vorhergehenden Ansprüche, wobei der Staubsaugerfilterbeutel eine die Einlassöffnung einfassende Halteplatte aufweist, die aus einem oder mehreren recycelten Kunststoffen gebildet ist oder einen oder mehrere recycelte Kunststoffe umfasst.

11. Staubsaugerfilterbeutel nach einem der vorhergehenden Ansprüche, wobei im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen gebildet ist.

12. Staubsaugerfilterbeutel nach einem der vorhergehenden Ansprüche, wobei der Gewichtsanteil aller recycelten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt.

13. Staubsaugerfilterbeutel nach einem der vorhergehenden Ansprüche, in Form eines Flachbeutels, eines Blockbodenbeutels oder eines 3D-Beutels.

14. Verwendung von recyclierten Kunststoffen gemäß der Norm DIN EN 15347:2007 für die Herstellung von Vliesstoffen und/oder Faservliesen für Staubsaugerfilterbeutel.

## Claims

1. A vacuum cleaner filter bag comprising a wall, that encloses an inner space and consists of an air-permeable material, as well as an inlet opening formed in the wall, **characterized in that**
the air-permeable material comprises at least one layer of a non-woven fabric and/or a layer of a fiber fleece, that comprises or consists of fibers, which are made from a recycled synthetic material or several recycled synthetic materials according to the DIN EN 15347:2007 standard.

2. The vacuum cleaner filter bag according to claim 1, wherein the recycled synthetic material is chosen from the group consisting of recycled polyesters, in particular recycled polyethylene terephthalate (rPET), recycled polybutylene terephthalate (rPBT), recycled polylactic acid (rPLA), recycled polyglycolide and/or recycled polycaprolactone; recycled polyolefines, in particular recycled polypropylene (rPP), recycled polyethylene and/or recycled polystyrene (rPS); recycled polyvinylchloride (rPVC), recycled polyamides, as well as mixtures and combinations thereof.

3. The vacuum cleaner filter bag according to one of the afore-mentioned claims, wherein the air-permeable material is constructed of multiple layers, wherein at least one, several or all the layers comprise or are made from a non-woven fabric and/or a fiber fleece, wherein the non-woven fabric or the fiber fleece comprise or consist of fibers, which are formed from a recycled synthetic material or several recycled synthetic materials.

4. The vacuum cleaner filter bag according to one of the afore-mentioned claims, wherein the air-permeable material comprises a capacity layer and a fine filter layer,
wherein the capacity layer is a non-woven fabric made of staple fibers produced using an aerodynamic method, wherein the staple fibers are made from a recycled synthetic material or several recycled synthetic materials, and
wherein the fine filter layer is a melt-blown non-woven fabric made of virgin PP, which is in particular electrostatically charged, or a melt-blown non-woven fabric made of bicomponent fibers with an rPET or rPP core and a mantle made of virgin PP or virgin PMP, or a support layer made of recycled synthetic material fibers onto which a layer of nanofibers is superimposed.

5. The vacuum cleaner filter bag according one of the afore-mentioned claims, wherein the air-permeable material comprises
at least one support layer and at least one fine filter layer, wherein at least one or all of the support layers and/or at least one or all of the fine filter layers represent non-woven fabrics which are formed from a recycled synthetic material or several recycled synthetic materials,
or
at least one support layer and at least one capacity layer, wherein at least one or all of the support layers represent non-woven fabrics and/or at least one or all of the capacity layers represent non-woven fabrics or fiber fleeces, which are formed from a recycled synthetic material or several recycled synthetic materials,
or
at least one support layer, at least one fine filter layer and at least one capacity layer, wherein at least one or all of the support layers and/or at least one or all of the fine filter layers describe non-woven fabrics, which are formed from a recycled synthetic material or several recycled synthetic materials and/or at least one or all of the capacity layers describe non-woven fabrics of fiber fleeces, which are formed from a recycled synthetic material or several recycled synthetic materials.

6. The vacuum cleaner filter bag according to the afore-mentioned claim, wherein
e) each support layer is a spun-bonded fabric or scrim, preferably with a grammage of 5 to 80 g/m², more preferably of 10 to 50 g/m², more preferably of 15 to 30 g/m² and/or preferably with a titer of the fibers forming the spun-bonded fabric or scrim in the range of 0.5 dtex to 15 dtex,
f) the air-permeable material comprises 1 to 3 support layers,
g) in a case, in which at least two support layers are provided, the total grammage of the sum of all support layers is 10 to 240 g/m², preferably 15 to 150 g/m², more preferably 20 to 100 g/m², more preferably 30 to 90 g/m², in particular 40 to 70 g/m², and/or
h) all the support layers are made from a recycled synthetic material or several recycled synthetic materials, in particular from rPET.

7. The vacuum cleaner filter bag according to one of the two afore-mentioned claims, wherein
f) each fine filter layer is an extruded non-woven fabric, in particular a melt-blown non-woven fabric, preferably with a grammage of 5 to 100 g/m², preferably 10 to 50 g/m², in particular 10 to 30 g/m²,
g) the air-permeable material comprises 1 to 5 fine filter layers,
h) in a case, in which at least two fine filter layers are provided, the total grammage of the sum of all fine filter layers is 10 to 300 g/m², preferably 15 to 150 g/m², in particular 20 to 50 g/m²,
i) at least one, preferably all the fine filter layers are formed from a recycled synthetic material or several recycled synthetic materials, in particular from rPET, and/or
j) at least one, preferably all the fine filter layers are electrostatically charged.

8. The vacuum cleaner filter bag according to one of the claims 5 to 7, wherein
d) each capacity layer is a staple fiber non-woven fabric, a fiber fleece or a non-woven fabric, which comprises a dust-like and/or fiber-liker recycled material from the production of textiles, in particular cotton textiles, and/or from seed fibers, wherein each capacity layer preferably has a grammage of 5 to 200 g/m², more preferably of 10 to 150 g/m², more preferably of 20 to 100 g/m², in particular 30 to 50 g/m²,
e) the air-permeable material comprises 1 to 5 capacity layers, and/or
f) in the case, in which at least two capacity layers are provided, the total grammage of the sum of all capacity layers is 10 to 300 g/m², preferably 15 to 200 g/m², more preferably 20 to 100 g/m², in particular 50 to 90 g/m².

9. The vacuum cleaner filter bag according to one of the afore-mentioned claims, wherein the air-permeable material is formed of multiple layers, which are arranged in the following order when seen from the inner space of the vacuum cleaner filter bag:
one support layer, at least one, preferably at least two fine filter layers, as well as one additional support layer,
or
one support layer, at least one, preferably at least two capacity layers, preferably one additional support layer, at least one, preferably at least two fine filter layers, as well as one additional support layer.

10. The vacuum cleaner filter bag according to one of the afore-mentioned claims, wherein the vacuum cleaner filter bag comprises a retaining plate surrounding the inlet opening, which is formed from one or several recycled synthetic materials and or comprises one or several recycled synthetic materials.

11. The vacuum cleaner filter bag according to one of the afore-mentioned claims, wherein at least one flow distributor and/or at least one diffuser are disposed in the inner space, wherein the at least one flow distributor and/or the at least one diffusor are preferably formed from a recycled synthetic material or several recycled synthetic materials.

12. The vacuum cleaner filter bag according to one of the afore-mentioned claims, wherein the weight proportion of all the recycled materials relative to the total weight of the vacuum cleaner filter bag is at least 25%, preferably at least 30%, more preferably at least 40%, more preferably at least 50%, more preferably at least 60%, more preferably at least 70%, more preferably at least 80%, more preferably at least 90%, in particular at least 95%.

13. The vacuum cleaner filter bag according to one of the afore-mentioned claims, in the form of a flat bag, a block bottom bag or a 3D bag.

14. Use of recycled synthetic materials according to the DIN EN 15347:2007 standard for the production of non-woven fabrics and/or fiber fleeces for vacuum cleaner filter bags.

## Revendications

1. Sac filtrant d'aspirateur à poussière comprenant une paroi entourant un espace intérieur constituée d'un matériau perméable à l'air, ainsi qu'une ouverture d'entrée ménagée dans la paroi,
**caractérisé en ce que**
le matériau perméable à l'air comporte au moins une couche d'un non-tissé et/ou une couche d'un non-tissé à fibres qui comporte ou se compose de fibres formées d'un matériau synthétique recyclé ou de plusieurs matériaux synthétiques recyclés selon la norme DIN EN 15347:2007.

2. Sac filtrant d'aspirateur à poussière selon la revendication 1, où le matériau synthétique recyclé est choisi parmi le groupe comprenant les polyesters recyclés, en particulier le polyéthylène téréphtalate recyclé (rPET), le polybutylène téréphtalate recyclé (rPBT), l'acide polylactique recyclé (rPLA), le polyglycolide recyclé et/ou le polycaprolactone recyclé ; les polyoléfines recyclés, en particulier le polypropylène recyclé (rPP), le polyéthylène recyclé et/ou le polystyrène recyclé (rPS) ; le polychlorure de vinyle recyclé (rPVC), les polyamides recyclés et leurs mélanges et combinaisons.

3. Sac filtrant d'aspirateur à poussière selon l'une des revendications précédentes, dans lequel le matériau perméable à l'air est constitué de plusieurs couches, où au moins une, plusieurs ou toutes les couches comportent ou sont formées d'un non-tissé et/ou d'un non-tissé à fibres, où le non-tissé, respectivement le non-tissé à fibres, comporte ou est formé de fibres qui sont formées d'un matériau synthétique recyclé ou de plusieurs matériaux synthétiques recyclés.

4. Sac filtrant d'aspirateur à poussière selon l'une des revendications précédentes, dans lequel le matériau perméable à l'air comporte une couche de capacité et une couche de filtre fin,
où la couche de capacité est un non-tissé formé de fibres discontinues produit au moyen d'un procédé aérodynamique, où la fibres discontinues sont formées d'un matériau synthétique recyclé ou de plusieurs matériaux synthétiques recyclés, et
où la couche de filtre fin est un non-tissé soufflé à l'état fondu en PP vierge, en particulier chargé électrostatiquement, ou un non-tissé soufflé à l'état fondu en fibres à deux composants avec un noyau en rPET ou en rPP et un manteau en PP vierge ou en PMP vierge ou une couche de support en fibres de matériau synthétique recyclé sur laquelle est appliquée une couche de nanofibres.

5. Sac filtrant d'aspirateur à poussière selon l'un des revendications précédentes, dans lequel le matériau perméable à l'air comporte
au moins une couche de support et au moins une couche de filtre fin, où au moins une ou toutes les couches de support et/ou au moins une ou toutes les couches de filtre fin représentent des non-tissés qui sont formés d'un matériau synthétique recyclé ou de plusieurs matériaux synthétiques recyclés,
ou
au moins une couche de support et au moins une couche de capacité, où au moins une ou toutes les couches de support représentent des non-tissés et/ou au moins une toutes les couches de capacité représentent des non-tissés ou des non-tissés à fibres qui sont formés d'un matériau synthétique recyclé ou de plusieurs matériaux synthétiques recyclés,
ou
au moins une couche de support, au moins une couche de filtre fin et au moins une couche de capacité, où au moins une ou toutes les couches de support et/ou au moins une ou toutes les couches de filtre fin représentent des non-tissés formés d'un matériau synthétique recyclé ou de plusieurs matériaux synthétiques recyclés et/ou au moins une ou toutes les couches de capacité représentent des non-tissés ou des non-tissés à fibres formés d'un matériau synthétique recyclé ou de plusieurs matériaux synthétiques recyclés.

6. Sac filtrant d'aspirateur à poussière selon la revendication précédente, où
e) chaque couche de support est un non-tissé filé-lié ou une gaze, de préférence avec un grammage de 5 à 80 g/m², plus préférablement 10 à 50 g/m², plus préférablement 15 à 30 g/m², et/ou de préférence avec des fibres composant le non-tissé filé-lié ou la gaze ayant un titre compris entre 0,5 dtex et 15 dtex,
f) le matériau perméable à l'air comprend 1 à 3 couches de support,
g) en présence d'au moins deux couches de support, le grammage total de la somme de toutes les couches de support est de 10 à 240 g/m², de préférence 15 à 150 g/m², plus préférablement 20 à 100 g/m², plus préférablement 30 à 90 g/m², en particulier de 40 à 70 g/m², et/ou
h) toutes les couches de support sont formées d'un matériau synthétique recyclé ou de plusieurs matériaux synthétiques recyclés, en particulier de rPET.

7. Sac filtrant d'aspirateur à poussière selon l'une des deux revendications précédentes, où
f) chaque couche de filtre fin est un non-tissé extrudé, en particulier un non-tissé soufflé à l'état fondu, de préférence avec un grammage de 5 à 100 g/m², de préférence 10 à 50 g/m², en particulier 10 à 30 g/m²,
g) le matériau perméable à l'air comprend 1 à 5 couches de filtre fin,
h) en présence d'au moins deux couches de filtre fin, le grammage total de la somme de toutes les couches de filtre fin est de 10 à 300 g/m², de préférence 15 à 150 g/m², en particulier 20 à 50 g/m²,
i) au moins une, de préférence toutes les couches de filtre fin sont formées d'un matériau synthétique recyclé ou de plusieurs matériaux synthétiques recyclés, en particulier de rPET, et/ou
j) au moins une, de préférence toutes les couches de filtre fin sont chargées électrostatiquement.

8. Sac filtrant d'aspirateur à poussière selon l'une des revendications 5 à 7, où
d) chaque couche de capacité est un non-tissé à fibres discontinues, un non-tissé à fibres ou un non-tissé qui comporte un matériau recyclé pulvérulent et/ou fibreux issu de la production de textiles, en particulier de textiles en coton, et/ou de fibres séminales, où chaque couche de capacité présente de préférence un grammage de 5 à 200 g/m², de préférence 10 à 150 g/m², plus préférablement 20 à 100 g/m², en particulier de 30 à 50 g/m²,
a) le matériau perméable à l'air comprend 1 à 5 couches de capacité, et/ou
b) en présence d'au moins deux couches de capacité, le grammage total de la somme de toutes les couches de capacité est de 10 à 300 g/m², de préférence 15 à 200 g/m², plus préférablement 20 à 100 g/m², en particulier de 50 à 90 g/m².

9. Sac filtrant d'aspirateur à poussière selon l'une des revendications précédentes, où le matériau perméable à l'air est formé de plusieurs couches agencées dans l'ordre suivant en partant de l'espace intérieur du sac filtrant d'aspirateur à poussière :
une couche de support, au moins une, de préférence au moins deux couches de filtre fin, et une autre couche de support
ou
une couche de support, au moins une, de préférence au moins deux couches de capacité, de préférence une autre couche de support, au moins une, de préférence au moins deux couches de filtre fin et une autre couche de support.

10. Sac filtrant d'aspirateur à poussière selon l'une des revendications précédentes, où le sac filtrant d'aspirateur à poussière comporte une plaque de maintien encadrant l'ouverture d'entrée formée d'un ou plusieurs matériaux synthétiques recyclés ou comportant un ou plusieurs matériaux synthétiques recyclés.

11. Sac filtrant d'aspirateur à poussière selon l'une des revendications précédentes, où au moins un distributeur d'écoulement et/ou au moins un diffuseur sont disposés dans l'espace intérieur, où l'au moins un distributeur d'écoulement et/ou l'au moins un diffuseur sont formés de préférence d'un matériau synthétique recyclé ou de plusieurs matériaux synthétiques recyclés.

12. Sac filtrant d'aspirateur à poussière selon l'une des revendications précédentes, où la proportion en poids de tous les matériaux recyclés par rapport au poids total du sac filtrant d'aspirateur à poussière représente au moins 25%, de préférence au moins 30%, de préférence au moins 40%, de préférence au moins 50%, de préférence au moins 60%, de préférence au moins 70%, de préférence au moins 80%, de préférence au moins 90%, en particulier au moins 95%.

13. Sac filtrant d'aspirateur à poussière selon l'une des revendications précédentes sous forme d'un sac plat, d'un sac à fond plat ou d'un sac en 3D.

14. Utilisation de matériaux synthétiques recyclés conformément à la norme DIN EN 15347:2007 pour la production de non-tissés et/ou de non-tissés à fibres pour des sacs filtrants d'aspirateur à poussière.
